# EUROPÄISCHE PATENTSCHRIFT

(11) **EP 0 593 790 B1**
(45) Veröffentlichungstag und Bekanntmachung des Hinweises auf die Patenterteilung: **27.12.1996**
(21) Anmeldenummer: 92117217.7
(22) Anmeldetag: 08.10.1992
(51) Int. Cl.: B01D 53/56, B01J 37/02

(54) **Katalysator zur Verminderung der Stickoxide im Rauchgas und Verfahren zu seiner Herstellung**
Catalyst for reducing of nitrogen oxide in smoke and process for its preparation
Catalyseur pour réduire l'oxyde d'azote dans un gaz de fumée et procédé pour sa fabrication

(43) Veröffentlichungstag der Anmeldung: 27.04.1994
(73) Patentinhaber: SIEMENS AKTIENGESELLSCHAFT, 80333 München (DE)
(72) Erfinder: Hüttenhofer, Klaus, W-8501 Heroldsberg (DE); Klatt, Andreas, W-8500 Nürnberg (DE)

(56) Entgegenhaltungen:
- EP-A- 0 246 413
- EP-A- 0 268 118
- DE-A- 3 433 093
- DE-A- 3 729 912
- US-A- 4 309 392
- US-A- 5 037 791
- PATENT ABSTRACTS OF JAPAN vol. 5, no. 49 (C-49)8. April 1981

## Beschreibung

Die Erfindung bezieht sich auf einen Katalysator zur Verminderung der Stickoxide in Rauchgas mit einer dem Rauchgas zugewandten katalytischen Oberflächenschicht. Außerdem bezieht sich die Erfindung auf ein Verfahren und eine Einrichtung zu seiner Herstellung.

Zur Verminderung der Stickoxide in Rauchgas ist es bekannt, einen sogenannten DeNOₓ-Katalysator einzusetzen, an dem die Stickoxide mit zuvor in das Rauchgas eingebrachtem Ammoniak nach dem Verfahren der selektiven katalytischen Reduktion (SCR) katalytisch zu Stickstoff und Wasser umgesetzt werden (vgl. dazu beispielsweise DE-C-24 58 888). Der DeNOₓ-Katalysator ist dabei in einem weiten Temperaturbereich einsetzbar, wobei jedoch die katalytische Aktivität dieses Katalysators mit sinkender Betriebstemperatur stark abnimmt. Zur Erzielung eines vorgegebenen Stickoxid-Reduktionsgrades ist deshalb bei niedrigen Betriebstemperaturen (< 250° C) ein relativ großes Katalysatorvolumen erforderlich.

Die vergleichsweise geringe katalytische Aktivität bei Temperaturen unter 250°C kann zwar durch eine Modifizierung des herkömmlichen DeNOₓ-Katalysators, z. B. durch die Erhöhung des V₂O₅-Gehaltes und/oder eine zusätzliche Dotierung mit beispielsweise FeO, etwas gesteigert werden; es verbleibt jedoch die Tatsache, daß DeNOₓ-Katalysatoren im Temperaturbereich unterhalb 250° C trotzdem nur relativ niedrige katalytische Aktivitäten aufweisen.

Aus der DE-A-34 33 093 ist ferner ein Katalysator bekannt, der mit Kohlenstoff als katalytisch aktivem Material beschichtet ist. Die mit Kohlenstoff als katalytisch aktivem Material beschichteten wabenförmigen Katalysatorträger umfassen keine katalytisch aktive Schicht, die üblicherweise aus Metalloxiden, wie z.B. des Vanadiums, des Eisens, des Molybdäns, des Wolframs, besteht und erreichen folglich nur vergleichsweise geringe Umsatzraten.

Der Erfindung liegt daher die Aufgabe zugrunde, einen Katalysator anzugeben, mit dem ein relativ hoher Stickoxid-Reduktionsgrad und ein daraus resulierendes relativ kleines Katalysatorvolumen erreicht wird, wenn die Temperatur des Rauchgases unterhalb 250° C liegt. Außerdem sollen ein einfach durchführbares Verfahren und eine Einrichtung zur Herstellung des Katalysators angegeben werden.

Die Aufgabe wird bezuglich des Katalysators erfindungsgemäß dadurch gelöst, daß auf der dem Rauchgas zugewandten katalytischen Oberflächenschicht eine weitere Schicht hoher Adsorptionsfähigkeit für Ammoniak und Stickoxide vorgesehen ist, wobei die weitere Schicht im wesentlichen aus einem oder mehreren der Materialien Koksstaub, Aktivkohlestaub, Aluminiumoxid, Zeolith und Fasermaterial mit geeigneter Porösität besteht.

Hierdurch werden die beiden Mechanismen unterstützt, die im Temperaturbereich unterhalb 250° C eine wesentliche Rolle für den erzielbaren Stickoxid-Umsatz spielen. Es sind dies zunächst die Diffusion von Ammoniak und Stickoxiden aus der Gasphase an die Katalysatoroberfläche (Adsorption) und dann die nachfolgende Diffusion von Ammoniak und Stickoxiden in die Poren des Katalysators. Durch die Verbesserung der Adsorptionsfähigkeit des Katalysators bei Temperaturen unterhalb 250° C werden den katalytisch aktiven Zentren vermehrt die Reaktonspartner Ammoniak und Stickoxide zugeführt, wodurch der Stickoxid-Abscheidgrad verbessert und die katalytische Aktivität des Katalysators angehoben wird. Infolge dieses Sachverhaltes sinkt bei vorgegebenen Rauchgasbedingungen das zur Erzielung eines vorgegebenen Abscheidegrades für Stickoxide erforderliche Katalysatorvolumen gegenüber dem Volumen bei der Verwendung eines herkömmlichen DeNOₓ-Katalysators.

Bezüglich des Verfahrens zur Herstellung des Katalysators wird die Aufgabe erfindungsgemäß dadurch gelost, daß der Katalysator nach dem Calcinieren mit einem Binder versetzt wird und daran anschließend Partikel eines Materials hoher Adsorptionsfähigkeit für Ammoniak und Stickoxide aufgebracht werden. Durch diese Vorgehensweise ist es möglich, einen Katalysator mit den obengenannten Eigenschaften herzustellen.

Bezüglich der Einrichtung wird die Aufgabe erfindungsgemäß dadurch gelöst, daß an einer Transportvorrichtung für den mit der weiteren Schicht zu versehenden Katalysator der Reihe nach eine Einrichtung zur Benetzung des Katalysators mit dem Binder und eine Einrichtung zur Bestäubung der katalytischen Oberflächenschicht mit einem Material besonders hoher Adsorptionsfähigkeit für Ammoniak und Stickoxide angeordnet sind.

In vorteilhafter Ausgestaltung der Erfindung kann die weitere Schicht hoher Adsorptionsfähigkeit im wesentlichen aus Koksstaub bestehen. Dieser Koksstaub kann beispielsweise gemahlener Formaktivkoks oder Herdofenkoks sein. Während ein unbeschichteter DeNOₓ-Katalysator im Neuzustand eine BET-Oberfläche von ca. 45 m²/g aufweist, hat eine Schicht aus Herdofenkoks oder aus Formaktivkoks, die auf den Katalysator aufgebracht ist, eine BET-Oberfläche von ca. 275 m²/g. Hierdurch eignen sich beide Stoffe zur Steigerung der Adsorption von Ammoniak und Stickoxiden an der Oberfläche des Katalysators.

Ausführungsbeispiele der Erfindung werden anhand von vier Figuren näher erläutert. Dabei zeigen:
- Figur 1: eine Einrichtung zur Durchführung des erfindungsgemäßen Verfahrens zur Herstellung eines "Zweischicht"-Katalysators;
- Figur 2: das Verhältnis A der Frischaktivitäten k eines erfindungsgemäßen "Zweischicht"-Katalysators bezogen auf die Frischaktivität k₀ eines herkömmlichen SCR-Niedertemperatur-Katalysators in Abhängigkeit von der Temperatur T; und
- Figur 3: einen Querschnitt durch einen pelletförmigen Zweischicht-Katalysator.

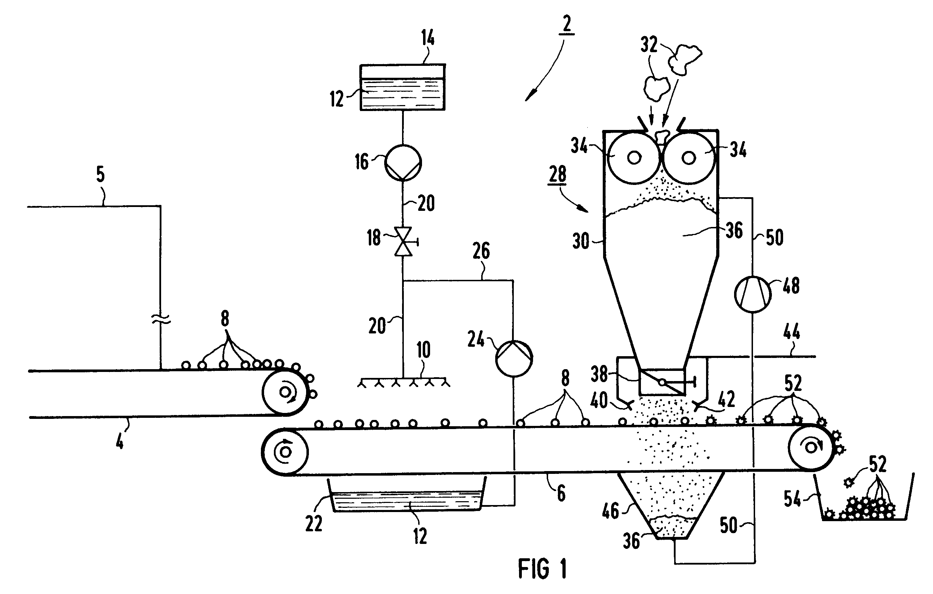

In der in Figur 1 dargestellten Einrichtung 2 zur Herstellung eines erfindungsgemäßen Zweischicht-Katalysators befördert ein erstes Fließband 4 den mittels einer Calcinier-Einrichtung 5 calcinierten Katalysator 8 auf ein zweites Fließband 6. Der Katalysator 8 liegt hierbei in Pellet-Form vor.

Die Katalysator-Pellets 8 bestehen aus Titanoxid mit einem oder mehreren der Zusätze Wolframoxid, Molybdänoxid, Vanadinpentoxid und Eisenoxid. Die katalytische Aktivität der Katalysator-Pellets 8 wird in diesem Ausführungsbeispiel im wesentlichen durch einen Anteil von 5 Gew.% Vanadinpentoxid V₂O₅ und 3 Gew.% Eisenoxid FeO am Gesamtkatalysatormaterial bestimmt. Die Katalysator-Pellets 8 weisen einen Durchmesser von etwa 5 mm und eine Länge von etwa 10 mm auf. Der gewählte Gehalt an Vanadinpentoxid und Eisenoxid zeichnet die Katalysator-Pellets 8 zum Einsatz im Niedertemperaturbereich aus.

Mittels des zweiten Fließbandes 6 werden die Katalysator-Pellets 8 zunächst an einem Sprüharm 10 vorbeigeführt, durch den die Katalysator-Pellets 8 mit einer Binderflüssigkeit 12 benetzt werden. Hierbei wird die Binderflüssigkeit 12 aus einem Vorratsbehälter 14 mittels einer Pumpe 16 über ein Stellventil 18 durch eine Zuführungsleitung 20 zum Sprüharm 10 geführt. Außerdem wird der mittels einer Auffangwanne 22 gesammelte, nicht von den Katalysator-Pellets 8 adsorbierte Teil der Binderflüssigkeit 12 mittels einer weiteren Pumpe 24 über eine Rezirkulationsleitung 26 unterhalb des Stellventils 18 und oberhalb des Sprüharms 10 in die Zuführungsleitung 20 für die Binderflüssigkeit eingeleitet. Als Binderflüssigkeit 12 wird im Ausführungsbeispiel Wasser verwendet. Um eine gleichmäßige Benetzung der Katalysator-Pellets 8 mit der Binderflüssigkeit 12 zu gewährleisten, ist für das zweite Fließband 6 ein ruckartiger Vorlauf gewählt, wodurch die Katalysator-Pellets 8 fortlaufend gewendet werden.

Im Anschluß an die Benetzung mit der Binderflüssigkeit 12 werden die Katalysator-Pellets 8 mittels des zweiten Fließbandes 6 unter eine Bestäubungseinrichtung 28 befördert. Die Bestäubungseinrichtung 28 umfaßt einen Vorratsbehälter 30, der eingangsseitig mit Aktivkohlebrocken 32 beschickt wird. Mittels einer in den Vorratsbehälter 30 eingebauten Mahlvorrichtung 34 werden diese Aktivkohlebrocken 32 gemahlen. Der Korndurchmesser des infolge der Mahlung entstehenden Aktivkohlestaubes 36 beträgt im Ausführungsbeispiel weniger als 0,5 mm. Über ein Stellglied 38 wird aus dem Vorratsbehälter 30 der Aktivkohlestaub 36 abgezogen. Mittels Düsen 40, 42, die über eine Druckluftleitung 44 mit Druckluft beaufschlagt sind, werden die Katalysator-Pellets 8 mit dem Aktivkohlestaub 36 angeblasen. Infolge der Benetzung der Katalysator-Pellets 8 mit der Binderflüssigkeit 12 haftet der Kohlestaub 36 adhäsiv an den Katalysator-Pellets 8, die infolge der ruckartigen Fortbewegung des zweiten Fließbandes 6 rundherum in eine dünne Schicht aus Aktivkohlestaub 36 eingehüllt werden. Der an den Katalysator-Pellets 8 vorbeifallende Aktivkohlestaub 36 wird in einem Behälter 46 aufgefangen und mittels eines Gebläses 48 über eine Rezirkulationsleitung 50 in den Vorratsbehälter 30 rezirkuliert.

Durch das Anblasen des Aktivkohlestaubes 36 mit Druckluft wird der auf den Katalysator-Pellets 8 haftende Aktivkohlestaub 36 gering verdichtet, wodurch sich eine relativ gute Haltbarkeit der Schicht aus Aktivkohlestaub 36 auf den Katalysator-Pellets 8 ergibt. Die fertigen, sogenannten Zweischicht-Katalysator-Pellets 52 werden in einem Sammelbehälter 54 aufgefangen und können ihrem bestimmungsgemäßen Einsatz zugeführt werden. Die BET-Oberfläche dieser Katalysator-Pellets 52 beträgt nun etwa 275 m²/g Aktivkohlestaub 36. Die BET-Oberfläche der unbeschichteten Katalysator-Pellets 8 liegt dagegen um etwa einen Faktor 6 niedriger. Hierdurch ist die Adsorptionsfähigkeit der Zweischicht-Katalysator-Pellets 52 gegenüber den herkömmlichen Katalysator-Pellets 8 beträchtlich angestiegen.

Bei der katalytischen Umsetzung der Stickoxide im Rauchgas werden bei Verwendung der Zweischicht-Katalysator-Pellets 52 um bis zu 50 % höhere katalytische Aktivitäten erreicht, wenn die Temperatur des Rauchgases etwa 150° C beträgt. Aufgrund des geringen Druckabfalls, den eine Schüttung von Zweischicht-Katalysator-Pellets 52 in der Rauchgasleitung einer Verbrennungsanlage verursacht, wird die auf die Katalysator-Pellets 8 aufgebrachte Schicht aus Aktiv-Kohlestaub 36 weiter verdichtet und damit die Beständigkeit und Adsorptionsfähigkeit der Schicht erhalten.

Bei der Verwendung von Platten- oder Wabenkatalysatoren erfolgt die Benetzung des Katalysators mit der Binderflüssigkeit durch Eintauchen des Katalysators in der Bindeflüssigkeit. Hierbei kann neben Wasser oder der Lösung eines Bindemittels auch ein organisches Bindemittel als Binderflüssigkeit verwendet werden. Ebenso ist es möglich, einen anorganischen Binder, wie z.B. ein Silikat, einzusetzen. Anschließend wird die katalytische Oberflächenschicht mit Staubpartikeln beschichtet. Bei Plattenkatalysatoren geschieht dies durch Aufblasen der Staubpartikel auf die Oberfläche, bei Wabenkatalysatoren durch das Einblasen in die Gaskanäle.

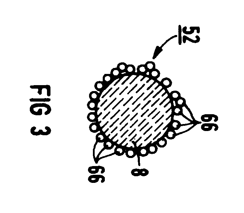

Figur 3 zeigt einen Schnitt durch den pelletförmigen Zweischicht-Katalysator 52 der Figur 1. Als weitere Schicht 66 sind die Aktivkohle-Partikel auf der Oberfläche des ursprünglich unbeschichteten Katalysator-Pellets 8 erkennbar.

Die Bestäubung des Katalysators kann auch bei vermindertem Druck durchgeführt werden. Hierdurch werden sowohl die Partikel des Materials hoher Adsorptionsfähigkeit als auch der Binder oder die Binderflüssigkeit stärker in die Poren der katalytisch aktiven Oberfläche des Katalysators gezogen als bei Normaldruckbedingungen, wodurch die Haftfestigkeit der aufgestäubten Schicht weiter verbessert wird.

Ein weiteres hier nicht weiter dargestelltes Ausführungsbeispiel erhält man, wenn ein herkömmlicher SCR-Niedertemperatur-Katalysator in Strömungsrichtung des Rauchgases hinter einem Herdofenkoks-Reaktor im Niedertemperaturbereich in der Rauchgasleitung einer Verbrennungsanlage eingebaut ist. Der SCR-Niedertemperatur-Katalysator setzt sich aus Titanoxid TiO₂ mit einem oder mehreren der Zusätze Wolframoxid WO₃, Molybdänoxid MoO₃, Vanadinpentoxid V₂O₅ und Eisenoxid FeO zusammen, wobei die katalytische Aktivität im wesentlichen durch die in diesem Ausführungsbeispiel im SCR-Niedertemperatur-Katalysator befindlichen 5 Gew. % Vanadinpentoxid V₂O₅ und 3 Gew. % Eisenoxid FeO bestimmt wird. Der SCR-Niedertemperatur-Katalysator ist in Pellet-Form mit einem Durchmesser von etwa 5 mm und einer Länge von etwa 10 mm ausgeführt. Das Rauchgas hat beim Eintritt in den SCR-Niedertemperatur-Katalysator eine Temperatur im Bereich von 130 bis 180° C.

Bedingt durch den diskontinuierlich notwendigen, teilweisen Abzug von Herdofenkoks (HOK) aus dem dem SCR-Niedertemperatur-Katalysator vorgeschalteten HOK-Reaktor entsteht ein Abrieb von Herdofenkoks, der mit dem Rauchgasstrom ausgetragen wird und sich auf der Oberfläche des nachgeschalteten SCR-Niedertemperatur-Katalysators ablagert. Auf diese Weise entsteht eine dünne Herdofenkoks-Schicht auf der Oberfläche des SCR-Niedertemperatur-Katalysators, die eine BET-Oberfläche von etwa 275 m²/g aufweist. Diese BET-Oberfläche ist damit etwa sechsmal grösser als die BET-Oberfläche eines frischen, unbeschichteten SCR-Niedertemperatur-Katalysators. Infolge der dünnen Herdofenkoks-Schicht besitzt der SCR-Niedertemperatur-Katalysator daher eine wesentlich verbesserte Adsorptionsfähigkeit für Ammoniak und Stickoxide.

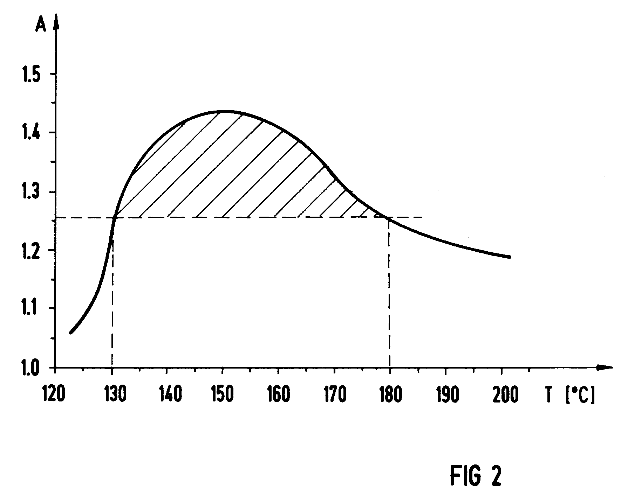

Die katalytische Aktivität k des auf die obengenannte Weise gebildeten "Zweischicht"-Katalysators ist in der Figur 2 bezogen auf die katalytische Aktivität k₀ eines herkömmlichen SCR-Niedertemperatur-Katalysators in Abhängigkeit von der Temperatur T dargestellt. In dem zu betrachtenden Temperaturbereich zwischen 130 und 180° C liegt die katalytische Aktivität k des Zweischicht-Katalysators um mindestens 25 % (A=1,25) über der katalytischen Aktivität k₀ des herkömmlichen SCR-Niedertemperatur-Katalysators. Für eine Temperatur von etwa 150° C des Rauchgases wird sogar eine Aktivitätsverbesserung von knapp 45 % (A=1,45) erreicht. Durch diese Aktivitätsverbesserung läßt sich - bei gegenüber dem herkömmlichen SCR-Niedertemperatur-Katalysator gleichem NOₓ-Abscheidegrad - eine Verringerung des erforderlichen Katalysatorvolumens in der gleichen prozentualen Höhe erzielen.

## Patentansprüche

1. Katalysator (52, 56) zur Verminderung der Stickoxide in Rauchgas mit einer dem Rauchgas zugewandten katalytischen Oberflächenschicht (62),
**dadurch gekennzeichnet**, daß auf der katalytischen Oberflächenschicht (62) eine weitere Schicht (64, 66) hoher Adsorptionsfähigkeit für Ammoniak und Stickoxide vorgesehen ist, wobei die weitere Schicht (64, 66) im wesentlichen aus einem oder mehreren der Materialien Koksstaub, Aktivkohlestaub, Aluminiumoxid, Zeolith und Fasermaterial mit geeigneter Porösität besteht.

2. Verfahren zur Herstellung eines Katalysators (52, 56) nach Anspruch 1,
**dadurch gekennzeichnet**, daß der Katalysator (52, 56) nach dem Calcinieren mit einem Binder (12) versetzt wird und daran anschließend Partikel eines Materials (36) hoher Adsorptionsfähigkeit für Ammoniak und Stickoxide aufgebracht werden.

3. Verfahren nach Anspruch 2,
**dadurch gekennzeichnet**, daß der Binder (12) vor dem Aufbringen auf die katalytische Oberflächenschicht (62) in einem Lösungsmittel aufgelöst wird.

4. Verfahren nach Anspruch 2 oder 3,
**dadurch gekennzeichnet**, daß die Partikel mittels Druckluft (40, 42, 44) aufgestäubt werden.

5. Verfahren nach einem der Ansprüche 2 bis 4,
**dadurch gekennzeichnet**, daß die Partikel einen Partikeldurchmesser kleiner 1 mm haben.

6. Verfahren nach einem der Ansprüche 2 bis 5,
**gekennzeichnet durch** Wasser (12) als Binder.

7. Verfahren nach einem der Ansprüche 2 bis 5,
**gekennzeichnet durch** einen organischen Binder.

8. Verfahren nach einem der Ansprüche 2 bis 5,
**gekennzeichnet durch** einen anorganischen Binder (z.B. Silikat).

9. Verfahren nach einem der Ansprüche 2 bis 8,
**dadurch gekennzeichnet**, daß die Partikel bei vermindertem Druck aufgebracht werden.

10. Einrichtung (2) zur Durchführung des Verfahrens nach einem der Ansprüche 2 bis 9,
**dadurch gekennzeichnet**, daß an einer Transporteinrichtung (6) für den mit der weiteren Schicht (64, 66) zu versehenden Katalysator (8) der Reihe nach eine Einrichtung (10 bis 26) zur Benetzung des Katalysators (52, 56) mit dem Binder (12) und eine Einrichtung (28) zur Bestäubung der katalytischen Oberflächenschicht (62) mit einem Material (36) besonders hoher Adsorptionsfähigkeit für Ammoniak und Stickoxide angeordnet sind.

## Claims

1. Catalyst (52, 56) for reducing the nitrogen oxides in flue gas with a catalytic surface layer (62) directed toward the flue gas, characterized in that on the catalytic surface layer (62) another layer (64, 66) of high adsorption capacity for ammonia and nitrogen oxides is provided, whereby the additional layer (64, 66) substantially consists of one or more of the following materials: coke dust, activated charcoal dust, aluminium oxide, zeolite and fibre material with suitable porosity.

2. Method for producing a catalyst (52, 56) according to claim 1, characterized in that after the calcination the catalyst (52, 56) is treated with a binder (12) and subsequently particles of a material (36) of high adsorption capacity for ammonia and nitrogen oxides are applied.

3. Method according to claim 2, characterized in that the binder (12) is dissolved in a solvent before application to the catalytic surface layer (62).

4. Method according to claim 2 or 3, characterized in that the particles are applied in dust form by means of compressed air (40, 42, 44).

5. Method according to one of claims 2 to 4, characterized in that the particles have a particle diameter of less than 1 mm.

6. Method according to one of claims 2 to 5, characterized by water (12) as binder.

7. Method according to one of claims 2 to 5, characterized by an organic binder.

8. Method according to one of claims 2 to 5, characterized by an inorganic binder (for example silicate).

9. Method according to one of claims 2 to 8, characterized in that the particles are applied at reduced pressure.

10. Apparatus (2) for carrying out the method according to one of claims 2 to 9, characterized in that on a transport device (6) for the catalyst (8) to be provided with the additional layer (64, 66), one after the other there are arranged an apparatus (10 to 26) for wetting the catalyst (52, 56) with the binder (12) and an apparatus (28) for dusting the catalytic surface layer (62) with a material (36) of especially high adsorption capacity for ammonia and nitrogen oxides.

## Revendications

1. Catalyseur (52, 56) pour diminuer la teneur en oxydes d'azote d'un gaz de fumée comprenant une couche (62) superficielle catalytique tournée vers le gaz de fumée,
caractérisé en ce qu'il est prévu sur la couche (62) superficielle catalytique une autre couche (64, 66) ayant une grande capacité d'absorption de l'ammoniac des oxydes d'azote, l'autre couche (64, 66) étant constituée essentiellement d'un ou plusieurs des matériaux que sont un poussier de coke, un poussier de charbon actif, un oxyde d'aluminium, un zéolite et une matière en fibre de porosité convenable.

2. Procédé de préparation d'un catalyseur (52, 56) suivant la revendication 1,
caractérisé en ce qu'il consiste à mélanger le catalyseur (52, 56) après la calcination à un liant (12) et ensuite à déposer des particules d'une matière (36) ayant une grande capacité d'absorption de l'ammoniac et des oxydes d'azote.

3. Procédé suivant la revendication 2,
caractérisé en ce qu'il consiste à dissoudre le liant (12) dans un solvant avant de le déposer sur la couche (62) superficielle catalytique.

4. Procédé suivant la revendication 2 ou 3,
caractérisé en ce qu'il consiste à répandre les particules au moyen d'air comprimé (40, 42, 44).

5. Procédé suivant l'une des revendications 2 à 4,
caractérisé en ce que les particules ont un diamètre inférieur à 1 mm.

6. Procédé suivant l'une des revendications 2 à 5,
caractérisé en ce qu'il consiste à utiliser de l'eau (12) comme liant.

7. Procédé suivant l'une des revendications 2 à 5,
caractérisé par un liant organique.

8. Procédé suivant l'une des revendications 2 à 5,
caractérisé par un liant minéral (par exemple silicate).

9. Procédé suivant l'une des revendications 2 à 8,
caractérisé en qu'il consiste à déposer les particules sous pression réduite.

10. Dispositif (2) pour la mise en oeuvre du procédé suivant l'une des revendications 2 à 9,
caractérisé en ce qu'il est prévu, sur un dispositif (6) de transport du catalyseur (8) à munir de l'autre couche (64, 66), successivement un dispositif (10 à 26) de mouillage du catalyseur (52, 56) par le liant (12) et un dispositif (28) de saupoudrage de la couche (62) superficielle catalytique d'une matière (36) ayant une capacité d'absorption de l'ammoniac et des oxydes d'azote particulièrement grande.
